# EUROPEAN PATENT SPECIFICATION

(11) **EP 4 244 807 B1**
(45) Date of publication and mention of the grant of the patent: **14.10.2026**
(21) Application number: 21723573.8
(22) Date of filing: 15.04.2021
(51) Int. Cl.: G06T 5/60, G06T 5/77, G06T 7/11, G06T 7/194, G06T 7/50

(54) **SYSTEMS AND METHODS FOR CONCURRENT DEPTH REPRESENTATION AND INPAINTING OF IMAGES**
SYSTEME UND VERFAHREN ZUR GLEICHZEITIGEN TIEFENDARSTELLUNG UND INPAINTING VON BILDERN
SYSTÈMES ET PROCÉDÉS DE REPRÉSENTATION DE PROFONDEUR SIMULTANÉE ET DE RETOUCHE D'IMAGES

(43) Date of publication of application: 20.09.2023
(73) Proprietor: Google LLC, Mountain View, CA 94043 (US)
(72) Inventor: KANAZAWA, Noritsugu, Mountain View, CA 94043 (US); PRITCH KNAAN, Yael, Mountain View, CA 94043 (US)
(74) Representative: Marks & Clerk GST
(86) International application number: PCT/US2021/027439
(87) International publication number: WO 2022/220832

(56) References cited:
- KOPF JOHANNES ET AL: "One shot 3D photography", ACM TRANSACTIONS ON GRAPHICS, ACM, NY, US, vol. 39, no. 4, 8 July 2020 (2020-07-08), pages 76:1 - 76:13, XP058634124, ISSN: 0730-0301, DOI: 10.1145/3386569.3392420
- LIANG YANGWEN ET AL: "The "Vertigo Effect" on Your Smartphone: Dolly Zoom via Single Shot View Synthesis", 2020 IEEE/CVF CONFERENCE ON COMPUTER VISION AND PATTERN RECOGNITION WORKSHOPS (CVPRW), IEEE, 14 June 2020 (2020-06-14), pages 1407 - 1415, XP033798914, DOI: 10.1109/CVPRW50498.2020.00180
- NEAL WADHWA ET AL: "Synthetic Depth-of-Field with a Single-Camera Mobile Phone", ARXIV.ORG, CORNELL UNIVERSITY LIBRARY, 201 OLIN LIBRARY CORNELL UNIVERSITY ITHACA, NY 14853, 11 June 2018 (2018-06-11), XP080889498, DOI: 10.1145/3197517.3201329

## Description

### BACKGROUND

Unless otherwise indicated herein, the materials described in this section are not prior art to the claims in this application and are not admitted to be prior art by inclusion in this section.

Images can represent aspects of a scene that a system may automatically remove or that may be remove based on manual selections of a user of a client device. For example, one or more aspects of the scene may distract a viewer of the image from an intended subject of the image (e.g., a person or piece of artwork). The system may remove these aspects of the environment from the image, leaving blank areas to be inpainted.

Inpainting the blank areas allows the image to appear cohesive while also omitting the aspects of the scene. However, inpainting aspects of the environment that are near to, or that overlap with, the subject of the scene may cause the subject to become occluded or distorted.

Some methods of inpainting an image by taking depth data into account are disclosed in J. Kopf et al.: "One shot 3D photography" by, ACM TRANSACTIONS ON GRAPHICS, vol. 39, no. 4, as well as in Y. Liang et al.: "The "Vertigo Effect" on Your Smartphone: Dolly Zoom via Single Shot View Synthesis", 2020 IEEE/CVF CONFERENCE ON COMPUTER VISION AND PATTERN RECOGNITION WORKSHOPS, and in N. Wadhwa et al.: "Synthetic Depth-of-Field with a Single-Camera Mobile Phone", CORNELL UNIVERSITY LIBRARY.

### SUMMARY

In a first example, a system is provided. The system includes a computing device. The computing device includes one or more processors, a memory, and a non-transitory computer readable medium having instructions stored thereon that when executed by a processor cause performance of a set of functions. The set of functions includes receiving an image from an image capture device. The set of functions includes determining a mask for the image. The the mask comprises (i) one or more inpainting regions that each designate a portion of the image to be inpainted, and (ii) a non-inpainting region that is not to be inpainted. The set of functions includes determining a depth representation including a pixelwise depth estimation for a scene represented by the image. A respective inpainting region in the mask includes pixels that represent two or more features of the scene. The two or more features have different depth estimates in the depth representation, and a respective feature of the two or more features overlaps with the non-inpainting region. The set of functions includes refining the respective inpainting region based on (i) the two or more features having different depth estimates, and (ii) the respective feature of the two or more features overlapping with the non-inpainting region. The set of functions includes inpainting the image in accordance with refining the respective inpainting region such that the portion of the respective feature that overlaps with the non-inpainting region is not inpainted.

In a second example, a method is provided. The method includes receiving an image from an image capture device. The method includes determining a mask for the image. The the mask comprises (i) one or more inpainting regions that each designate a portion of the image to be inpainted, and (ii) a non-inpainting region that is not to be inpainted. The method includes determining a depth representation including a pixelwise depth estimation for a scene represented by the image. A respective inpainting region in the mask includes pixels that represent two or more features of the scene. The two or more features have different depth estimates in the depth representation, and a respective feature of the two or more features overlaps with the non-inpainting region. The method includes refining the respective inpainting region based on (i) the two or more features having different depth estimates, and (ii) the respective feature of the two or more features overlapping with the non-inpainting region. The method includes inpainting the image in accordance with refining the respective inpainting region such that the portion of the respective feature that overlaps with the non-inpainting region is not inpainted.

In a third example, a non-transitory computer readable medium is provided. The non-transitory computer readable medium has instructions stored thereon that when executed by a processor cause performance of a set of functions. The set of functions includes receiving an image from an image capture device. The set of functions includes determining a mask for the image. The the mask comprises (i) one or more inpainting regions that each designate a portion of the image to be inpainted, and (ii) a non-inpainting region that is not to be inpainted. The set of functions includes determining a depth representation including a pixelwise depth estimation for a scene represented by the image. A respective inpainting region in the mask includes pixels that represent two or more features of the scene. The two or more features have different depth estimates in the depth representation, and a respective feature of the two or more features overlaps with the non-inpainting region. The set of functions includes refining the respective inpainting region based on (i) the two or more features having different depth estimates, and (ii) the respective feature of the two or more features overlapping with the non-inpainting region. The set of functions includes inpainting the image in accordance with refining the respective inpainting region such that the portion of the respective feature that overlaps with the non-inpainting region is not inpainted.

Other aspects, embodiments, and implementations will become apparent to those of ordinary skill in the art by reading the following detailed description, with reference where appropriate to the accompanying drawings.

### BRIEF DESCRIPTION OF THE FIGURES

Figure 1 is a block diagram of a system, according to an example embodiment.
Figure 2A is illustrates a portion of a system for generating an inpainted image, according to an example embodiment.
Figure 2B illustrates a portion of a system for generating an inpainted image, according to an example embodiment.
Figure 2C illustrates a portion of a system for generating an inpainted image, according to an example embodiment.
Figure 2D illustrates a portion of a system for generating an inpainted image, according to an example embodiment.
Figure 3A illustrates a portion of a system for training a machine learning model for image inpainting, according to an example embodiment.
Figure 3B illustrates a portion of a system for training a machine learning model for image inpainting, according to an example embodiment.
Figure 4A is an input image to be inpainted, according to an example embodiment.
Figure 4B is a mask including a plurality to inpainting regions to be inpainted in the input image, according to an example embodiment.
Figure 4C is a depth representation of the input image, according to an example embodiment.
Figure 4D is an inpainted image, according to an example embodiment.
Figure 4E is an inpainted image with a depth of field effect, according to an example embodiment.
Figure 5 is a block diagram of a method, according to an example embodiment.

### DETAILED DESCRIPTION

Example methods, devices, and systems are described herein. It should be understood that the words "example" and "exemplary" are used herein to mean "serving as an example, instance, or illustration." Any embodiment or feature described herein as being an "example" or "exemplary" is not necessarily to be construed as preferred or advantageous over other embodiments or features. Other embodiments can be utilized, and other changes can be made, without departing from the scope of the subject matter presented herein.

Thus, the example embodiments described herein are not meant to be limiting. Aspects of the present disclosure, as generally described herein, and illustrated in the figures, can be arranged, substituted, combined, separated, and designed in a wide variety of different configurations, all of which are contemplated herein.

Further, unless context suggests otherwise, the features illustrated in each of the figures may be used in combination with one another. Thus, the figures should be generally viewed as component aspects of one or more overall embodiments, with the understanding that not all illustrated features are necessary for each embodiment.

By the term "about" or "substantially" with reference to amounts or measurement values described herein, it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

### I. Overview

Automatically inpainting an image typically involves training one or more neural networks to fill in one or more inpainting regions of an input image with features surrounding the inpainting regions. For example, a mask of regions for inpainting can be determined by identifying one or more regions in the input image that distract from a subject of the image (e.g., a person, a piece of art, a building, or another object). These might be other objects in the foreground or background of a scene that amount to unnecessary or unwanted information (e.g., people, vehicles, or other objects). A neural network can be trained to identify these aspects of the image and to output an image corresponding to a mask defining the regions to be inpainted. When inpainting, aspects of the background can be used to fill in the regions previously occupied by the distracting features of the image.

In some examples, distracting features of the scene may be near to, or may intersect with, a subject of the scene when represented in an image. For example, a first person (the subject) may be in the foreground of an image and a portion of a second person (a distractor) may be in the background, with another portion of the second person being occluded by the first person. Described another way, the first person is at least partially in front of the second person, and the image shows the two people overlapping. Automatically removing the portion of the second person that is shown in the image presents difficulties. For example, generating a mask for the image for inpainting may involve recognizing the portion of the second person, designating the portion as a background feature, and determining an outline of an inpainting region. The outline may include a buffer area surrounding the portion of the second person to ensure that the entire distracting feature is removed by inpainting. However, because the inpainting region intersects with the subject (the first person) this buffer region may result in inpainting a portion of the subject, and result in an occluded, obscured, or otherwise degraded representation of the first person. In addition, inpainting the masked region may involve generating pixel values in the inpainting region based on surrounding pixels. In these examples, pixel values from the subject may be used for generating at least part of the inpainted pixels in the inpainting region. This can result in edges of the subject appearing blurry, distorted, or otherwise degraded. Accordingly, either of these examples may introduce new distractions within the image or otherwise degrade the image.

Inpainting an input image may take these issues into account by using a depth representation of the scene when making inpainting decisions. For example, a portion of an inpainting region (e.g., a foreground object in the scene or a subject of the scene) that has a different depth estimate relative to other portions of the inpainting region may be omitted from inpainting. This may prevent portions of the subject from being removed from the image due to inpainting. Similarly, when an inpainting region with a first depth estimate is adjacent to a foreground object with a second depth estimate, pixels from the foreground object might not be used for generating pixel values used for inpainting the inpainting region. The described embodiments resolve issues that arise when inpainting an image, such as contexts for automatically inpainting an input image.

Within examples, one or more neural networks can be used for automatically inpainting one or more inpainting regions associated with an image. For example, a neural network can be used for concurrently determining a depth representation (e.g., a disparity map, a depth map, or another pixelwise representation of depth in an image) of the input image and for inpainting one or more inpainting regions of the input image based on a mask of the image and based on the image itself. Depth representations determined by the neural network can be used for automatically inpainting regions of the input image in the manner described above.

Within examples, inpainting an image may result in a plurality of artifacts (e.g., image features that are altered during image processing) that may be noticeable in the image. For example, edges of the inpainted regions may appear distorted, the inpainted regions may appear blurry, or the inpainted regions may be discolored, or otherwise may appear inconsistent with non-inpainted portions of the image. A system may track a number of artifacts, or a ratio of inpainted pixels to non-inpainted pixels to determine whether to apply a depth of field effect to the inpainted image. In these examples, the depth of field effect may be applied to the inpainted image to blend artifacts in with surrounding parts of the image. By combining refined inpainting with depth of field effects, the disclosed embodiments may provide an image that removes distracting features from the image and also provides a cohesive image that focuses on the subject of a scene.

The examples described herein address limitations introduced by inpainting an image by providing a framework for inpainting that can avoid features of a subject from being removed or distorted by inpainting regions of an input image. This results in an inpainted output image that limits inpainting artifacts and focuses on the subject of the image more clearly.

### II. Example Systems

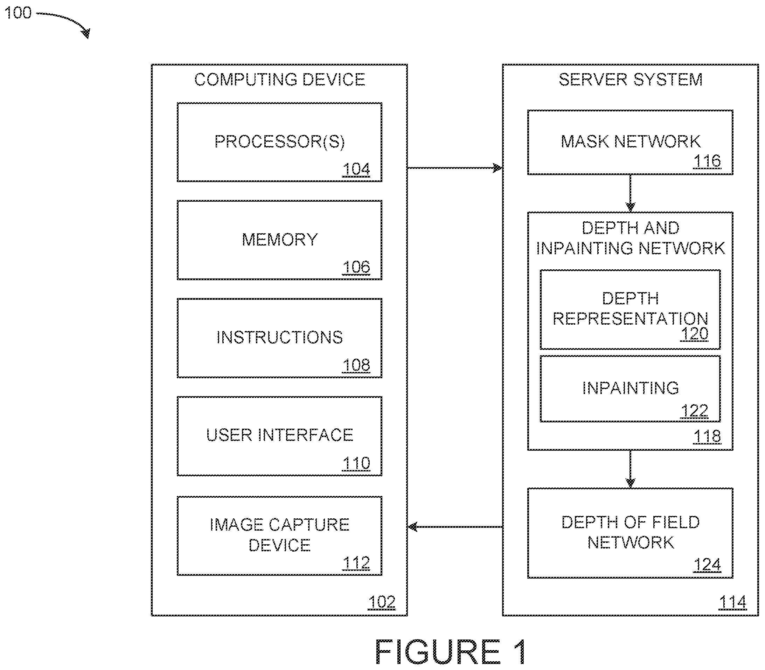

Figure 1 is a block diagram of a system, according to an example embodiment. In particular, Figure 1 shows a system 100 having a computing device 102 and a server system 114. The computing device 102 includes processor(s) 104, a memory 106, and instructions 108 stored on the memory 106 and executable by the processor(s) 104 to perform functions.

The processor(s) 104 can include on or more processors, such as one or more general-purpose microprocessors and/or one or more special purpose microprocessors. The one or more processors may include, for instance, an application-specific integrated circuit (ASIC) or a field-programmable gate array (FPGA). Other types of processors, computers, or devices configured to carry out software instructions are contemplated herein.

The memory 106 may include a computer readable medium, such as a non-transitory computer-readable medium, such as, but not limited to, read-only memory (ROM), programmable read-only memory (PROM), erasable programmable read-only memory (EPROM), electrically erasable programmable read-only memory (EEPROM), non-volatile random-access memory (e.g., flash memory), a solid state drive (SSD), a hard disk drive (HDD), a Compact Disc (CD), a Digital Video Disk (DVD), a digital tape, read/write (R/W) CDs, R/W DVDs, etc. Other types of storage devices, memories, and media are contemplated herein.

The instructions 108 are stored on memory 106 and are executable by processor(s) 104 to carry out functions described herein.

Computing device 102 further includes a user interface 110 and an image capture device 112. The image user interface can include a touchscreen, a keyboard, or any other device configured to sense user input. The image capture device 112 can be any device configured to capture an image, such as an RGB image. For example, image capture device 112 can include a camera.

The server system 114 is communicatively coupled to computing device 102. Server system 114 is configured to receive an input image from computing device 102, and to generate an output image with inpainted regions of the input image. Server system 114 includes a mask network 116, a depth and inpainting network 118 configured to generate a depth representation 120 of the input image and to perform inpainting 122 on one or more inpainting regions of the input image, and a depth of field network 124. These components of the server system 114 may be implemented in hardware (e.g., by using one or more specialized deep neural network computing devices) or in software (e.g., by connecting outputs of processors and/or computing devices together to carry out functionality of the neural networks). In certain implementations, server system 114 can represent a set of cloud servers associated with computing device 102. For example, computing device 102 can be a mobile device connected to a network provider, and the network provider can facilitate communication between computing device 102 and the set of cloud servers for storage and/or processing purposes. In other examples, server system 114 can be local to computing device 102 or combined with computing device 102. Other configurations of system 100 are possible. Server system 114 can include a plurality of computing devices having processors, memories, and instructions configured in a similar manner to those described above with respect to computing device 102.

The mask network 116 is a neural network configured for extracting two-dimensional features from images. For example, the mask network 116 can be an object detection network for generating masks that remove one or more objects from an input image, a segmentation network for masks that define one or more boundaries between foreground and background regions in an input image, an optical character recognition (OCR) network for generating masks that remove text in an input image, or other networks configured for identifying features to remove from an input image.

The mask network 116 is configured to receive an image from computing device 102, perhaps via a network. The mask network 116 extracts a plurality of two-dimensional features to output a masked version of the input image that defines one or more regions for inpainting. For example, this may involve using at least one convolutional layer, a pooling layer, and one or more hidden layers configured to filter and downsample the image into a plurality of extracted two-dimensional features used for identifying regions to be inpainted. The regions correspond to a mask that is multiplied with the input image to remove information from the inpainting regions (e.g., by setting pixel values to white or black).

Within examples, masks can be generated using other means, such as by image processing techniques that automatically identify regions to remove from an input image without using a neural network. In other examples, a user of a computing device (e.g., the computing device 102) can manually select regions to remove, and the input image can be provided directly to the depth and inpainting network 118.

The depth and inpainting network 118 is a neural network configured for determining depth representation 120 of the input image (e.g., determine a depth representation with pixelwise depth estimates) and performing inpainting 122 of one or more inpainting regions of the input image. For example, the depth and inpainting network 118 can be a two-dimensional convolutional neural network (2D CNN) implemented as a residual network, a U-Net, an auto-encoder, or another type of neural network configured for determining depth representations of images and/or inpainting images. The 2D CNN may include residual connections, dense connections, or another type of skip connection, a generative adversarial network (GAN), or other architectural features configured for estimating pixel depths of an input image, identifying inpainting regions for inpainting, and automatically generating information to populate into the regions. Within examples, the depth and inpainting network 118 can be a hybrid neural network. For example, the hybrid neural network may be two or more architecturally separate 2D CNNs, a 2D CNN and a 3D CNN, or another neural network framework that is partitioned so that a first aspect of the hybrid neural network performs a first type of task and a second aspect of the neural network performs a second type of task. Other types of neural networks are possible.

As used herein, the term "convolutional neural network" refers to a type of deep neural network characterized by (i) one or more filters (otherwise referred to as "kernels") convolved with an input and (ii) pooling of multiple convolutional layers.

The depth and inpainting network 118 is configured to receive an input image and a mask from the computing device 102, a computing device associated with the mask network 116, or another computing device, perhaps via a network. The depth and inpainting network 118 outputs the depth representation (e.g., a disparity map, depth map, or another pixelwise depth representation of the input image) of the input image and an inpainted version of the input image. These inpainting regions are populated with automatically-generated information determined based on extracted two-dimensional features of the input image. For example, this may involve an encoder using at least one convolutional layer, a pooling layer, and one or more hidden layers configured to filter and downsample the image into a plurality of extracted two-dimensional intermediate features, and a decoder using at least one convolutional layer, a pooling layer, and one or more hidden layers configured to filter and upsample the intennediate features into another set of two-dimensional features used for identifying one or more inpainting regions for inpainting and generating pixel values used to fill the one or more inpainting regions.

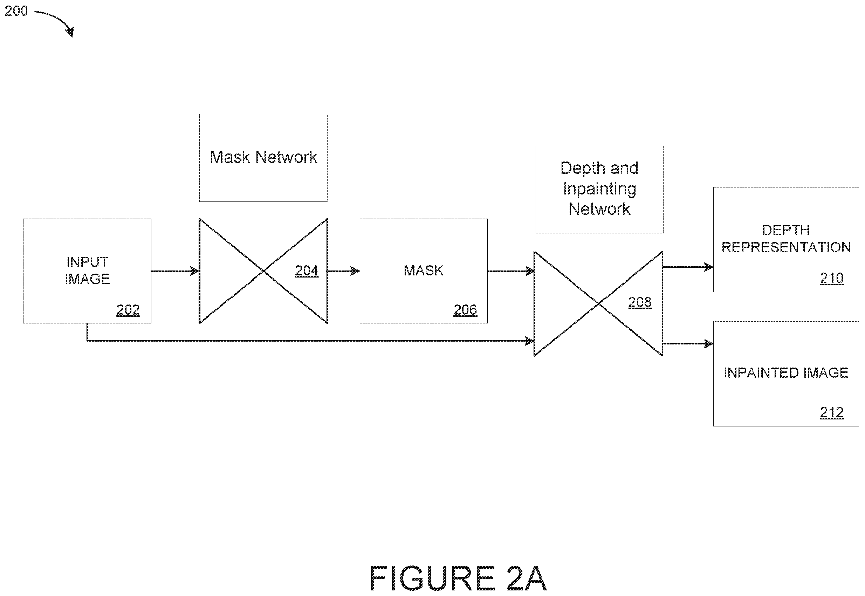

By generating a depth representation and performing inpainting concurrently within the same neural network, the depth and inpainting network 118 can leverage depth information from the depth representation 120 to refine inpainting regions to more accurately and effectively perform the inpainting 122. As used herein, the term "concurrently" refers to performing tasks within the same functional step of a method such that their performance begins at substantially the same time and their output to another functional step occurs at substantially the same time. In the context of a neural network, performing two or more tasks concurrently may involve the neural network receiving one or more inputs (e.g., an input image and a mask of the input image), performing two or more tasks (e.g., a depth representation task and an inpainting task) based on the one or more inputs, and outputting a result of the two or more tasks (e.g., a depth representation and an inpainted image) at substantially the same time. Further details of inpainting an input image are provided below with respect to Figures 2A-5.

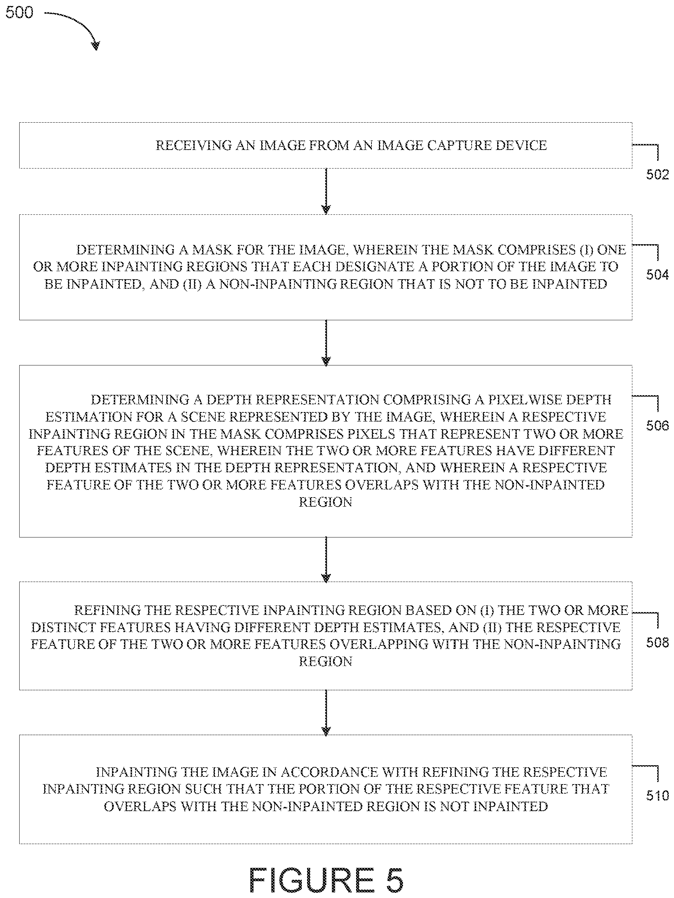

As described further below with respect to Figure 5, refining one or more inpainting regions defined by the mask may be performed without a neural network. For example, pixelwise depth thresholding can be used for refining the inpainting region. Pixels that differ from an average depth estimate of an inpainting region by more than a threshold amount may be omitted from the inpainting region. In these examples, separate neural networks can be used for the depth representation 120 and for the inpainting 122, and a computing device may use a depth representation from the depth network to provide a refined mask for the inpainting network. Combining the depth representation 120 and the inpainting 122 operations into a single neural network as shown in Figure 1 may reduce computing requirements of the system by removing the refined mask operations, and may reduce training requirements of the neural networks by combining functions of two separate neural networks into a single neural network. For example, rather than training two neural networks with two different types of inputs, a single neural network can be trained with a single set of inputs.

The depth of field network 124 is configured to receive a depth representation and an inpainted image from a computing device associated with the depth and inpainting network 118 or another computing device, and is configured to output an inpainted image with a depth of field effect. For example, the depth representation can be used for applying different focus levels to different portions of the inpainted image. In particular, inpainted portions of the inpainted image and surrounding areas of the inpainted image may be defocused (e.g., a Bokeh effect may be applied), while a subject of the inpainted image may remain in focus.

The depth of field network 124 can be a two-dimensional convolutional neural network (2D CNN) implemented as a residual network, a U-Net, an auto-encoder, or another type of neural network configured for extracting two-dimensional features in the inpainted image and applying a depth of field effect to the inpainted image. The 2D CNN may include residual connections, dense connections, or another type of skip connection, a generative adversarial network (GAN), or other architectural features configured for segmenting an image for the depth of field effect based at least in part on a depth representation of the inpainted image and applying the depth of field effect to one or more portions of the segmented inpainted image.

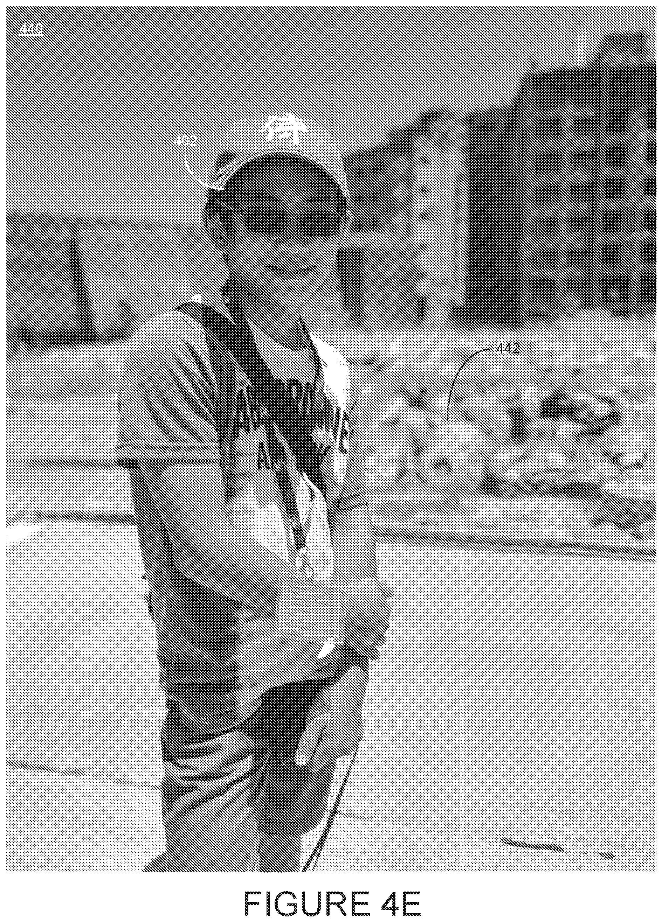

Within examples, the depth of field effect might not be applied by a neural network. Rather, a computing device may apply the depth of field effect based on the depth representation 120 and the inpainting 122. For example, a computing device may automatically apply the depth of field effect if a threshold number of artifacts are detected in the inpainted image. Further details regarding the depth of field effect are provided below with respect to Figures 4E and 5.

The server system 114 provides an output image to the computing device 102 or another computing device that has requested an inpainted image. For example, a user device (e.g., a mobile phone, tablet, or personal computer) may capture an image and automatically send the image to the server system 114 along with a request for an output image with distracting aspects of the image removed and replaced with inpainting. The server system 114 can return an output image from the depth and inpainting network 118 or from the depth of field network 124. Further details of providing output images are described below with respect to Figures 2A-5.

Within examples, the mask network 116, the depth and inpainting network 118, and the depth of field network 124 are pre-trained separately prior to being implemented collectively for inpainting an input image. This may allow for more predictable outputs from each network. After pre-training, each network can be jointly trained.

Figure 2A is illustrates a portion of a system 200 for generating an inpainted image, according to an example embodiment. Within examples, the system can include or be similar to the system 100, the server system 114, or a computing device thereof. In Figure 2A, the system 200 or a computing device thereof receives an input image 202. For example, the system 100 can receive the image from the computing device 102, perhaps via a network. The input image 202 can be a monocular RGB or grayscale image, and thus can represent a multichannel or single-channel input, and include a two-dimensional array of data. The input image includes one or more distractors that draw attention away from a subject of the input image 202.

The system 200 includes a mask network 204. The mask network may be the same or similar to the mask network 116. The system 200 or a computing device thereof provides the input image 202 to the mask network 204. The mask network is configured to output a mask 206 of the input image 202. The mask 206 defines one or more inpainting regions to be inpainted and a non-inpainting region not to be inpainted. For example, the one or more inpainting regions may correspond to the one or more distractors. In some examples, the inpainting regions may be outlines of identified distractors (e.g., recognized objects in a background of a scene represented by the input image 202), or may include a buffer region surrounding the outlines of identified distractors to increase the likelihood that the entire distractor is inpainted.

The system 200 or a computing device thereof provides the input image 202 and the mask 204 to a depth and inpainting network 208. The depth and inpainting network 208 may be similar to the depth and inpainting network 118. The depth and inpainting network 208 is configured to create a depth representation 210 of the input image and to inpaint the input image based on the mask and the depth representation to form an inpainted image 212. For example, this may involve refining the inpainting regions defined by the mask.

Providing the input image and the mask to the depth and inpainting network may be performed in a training context in which the input image and the mask are used to improve the depth and inpainting network such that the network provides accurate depth representations and improved inpainting of the input image. Providing the input image and the mask to the depth and inpainting network may alternatively be performed in a prediction context in which the trained depth and inpainting network is used to provide an output image to a client device (e.g., a mobile device).

The system 200 or a computing device thereof receives the depth representation 210 and the inpainted image 212 from the depth and inpainting network 208. The depth representation may be a disparity map, depth map, or another pixelwise estimation of depths of features in a scene represented by the input image, and can be used for determining and applying depth of field effects to the inpainted image 212.

The inpainted image 212 may be used as an output image for a system. For example, a computing device associated with the system 200 may receive the input image from a client device (e.g., a mobile device on a network), and may cause the mask network 204 and the depth and inpainting network 208 to generate an output image for transmission to the client device.

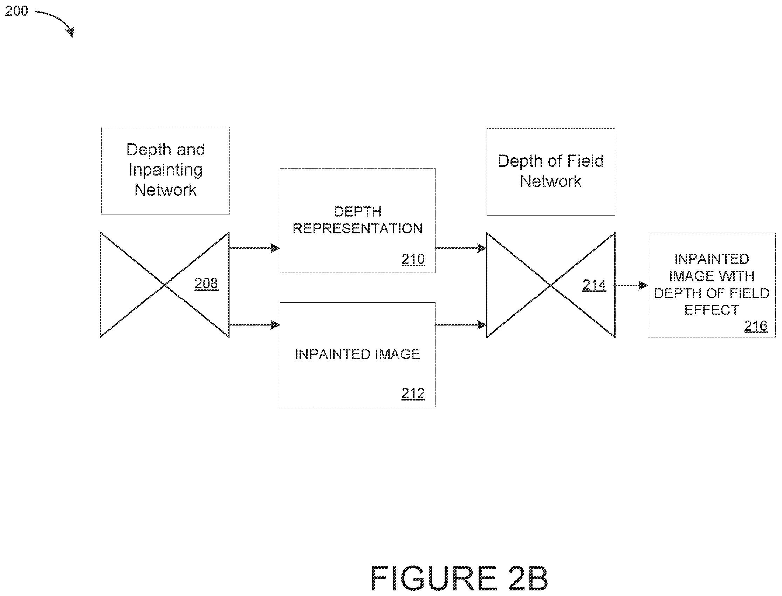

Figure 2B illustrates a portion of a system for generating an inpainted image, according to an example embodiment. In particular, Figure 2B includes additional portions of the system 200 that can be used for generating an inpainted image with a depth of field effect. Within examples, an inpainted image may include a plurality of artifacts that replace distractors (e.g., objects or features of an environment other than a subject of the input image), but the artifacts may also distract from a subject of a scene depicted by the input image. For example, each inpainting region may be filled with pixels that are automatically generated by the depth and inpainting network. While the automatically generated pixels may resemble surrounding pixels from the input image, they may still be blurry, discolored, or otherwise noticeable within the image. In these examples, the inpainted image may be provided to a depth of field network for application of a depth of field effect. The depth of field effect may assist in blending the inpainted regions with other portions of the image.

The system 200 includes a depth of field network 214. The system 200 or a computing device associated with the system 200 provides the depth representation 210 and the inpainted image 212 to a depth of field network. The depth of field network 214 may be the same or similar to the depth of field network 124, and is configured to apply a depth of field effect to the inpainted image to limit the noticeability of the image artifacts from the inpainting. The depth of field network leverages the depth representation 210 to distinguish separate features of the inpainted image 212. For example, a Bokeh effect may be applied that keeps a subject in the foreground of the image in focus, but defocuses other areas of the image that include the image artifacts. Other depth of field effects are possible.

The system 200 or a computing device associated with the system 200 receives an inpainted image with the depth of field effect from the depth of field network 214. This can be used as an output image that is transmitted to a client device (e.g., the computing device 102).

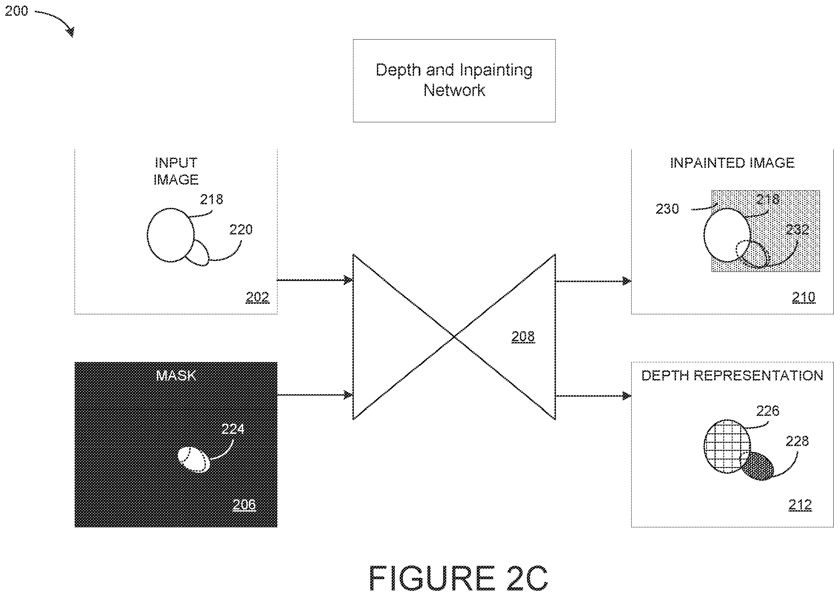

Figure 2C illustrates a portion of a system for generating an inpainted image, according to an example embodiment. In particular, Figure 2C illustrates an example in which the input image 202 received by system 200 includes a subject 218 and a distractor 220. For example, the subject 218 may be a face of a first person, and the distractor may be an object situated at least partially behind the subject 218 in the scene represented by the input image 202. Because the distractor 220 is behind the subject 218 and because the distractor 220 is at least partially visible in the input image 202, the distractor 220 overlaps with the subject 218 in the input image. Accordingly, the system 200 or a computing device associated with the system 200 provides the depth and inpainting network 208 with the mask 206 that includes an inpainting region 224 corresponding to the distractor 220. By inpainting the inpainting region 224, the depth and inpainting network 208 can effectively remove the distractor 220 from the image.

The inpainting region 224 corresponds to an outline of the distractor 220, which is illustrated by a dashed line in Figure 2C. The inpainting region 224 does not exactly match the outline of the distractor 220. Within examples, this difference between the inpainting region 224 and the outline of the distractor may be because the mask network 204 adds a buffer region around each recognized distractor in the input image 202 to ensure that the entire distractor is removed, because the edges of the distractor 220 are unclear, or because the mask is manually drawn by a user of a client device. If provided directly to an inpainting network, the inpainting network uses surrounding pixels in the input image 202 to inpaint the inpainting region 224. Because the inpainting region 224 overlaps with the subject 218, some features of the subject 218 may be used for inpainting the inpainting region 224, or portions of the subject 218 may be inpainted. After inpainting, this can result in the subject 218 appearing distorted, blurry, or otherwise degraded in the inpainted image 212. Further, the inpainting region 224 itself may appear disjointed or unrecognizable because the automatically generated pixel values are not all derived from pixels in a similar portion of the environment. For example, if the distractor 220 is in the background of the input image, using pixels from the subject 118 for inpainting may blur the boundary between the foreground and the background, or may artificially expand the foreground.

By using the depth and inpainting network 208 to concurrently generate a depth representation 210 of the input image 202 and for inpainting the input image 202, pixels that are not part of the background scene can be omitted from use when automatically generating pixel values for inpainting. This is illustrated in the inpainted image 212 and the depth representation 210. The depth representation 210 shows that a first depth estimation 226 of the subject 218 is different from a second depth estimation 228 of the distractor 220. This difference indicates that the inpainting region 224 overlaps with the subject 218. Accordingly, the depth representation 210 assists the depth and inpainting network 208 to determine which pixels in the input image 202 for use when inpainting the inpainting region 224.

In the example illustrated in Figure 2C, the inpainted image 212 includes a refined inpainting region 232. The refined inpainting region 232 has been adjusted relative to the inpainting region 224 to more closely match the outline of the distractor 220. For example, pixels that overlap with the subject 218 have been removed from inpainting region 224 to form the refined inpainting region 232. These adjustments to the inpainting region 224 are based on differences in depth estimations in the depth representation 210. For example, the first depth estimation 226 is different from the second depth estimation 228, which allows the depth and inpainting network to adjust the inpainting region 224 to omit pixels that correspond to the first depth estimation. Further, the refined inpainting region 232 is inpainted with pixels that are derived from a background region 230. The background region 230 may have pixels with a depth representation that is similar to the second depth estimation 228, so the depth and inpainting network 208 uses these pixels to inpaint the refined inpainting region 232.

By leveraging depth estimations and associating these representations with one or more inpainting regions in the mask 206, the depth and inpainting network 208 can avoid inpainting certain portions of the input image 202. For example, the subject 218 can be omitted from inpainting based on a difference between the first depth estimation 226 and the second depth estimation 228. This allows the depth and inpainting network to overcome issues tied specifically to automatically inpainting images by preserving details of subjects while also removing details of distractors.

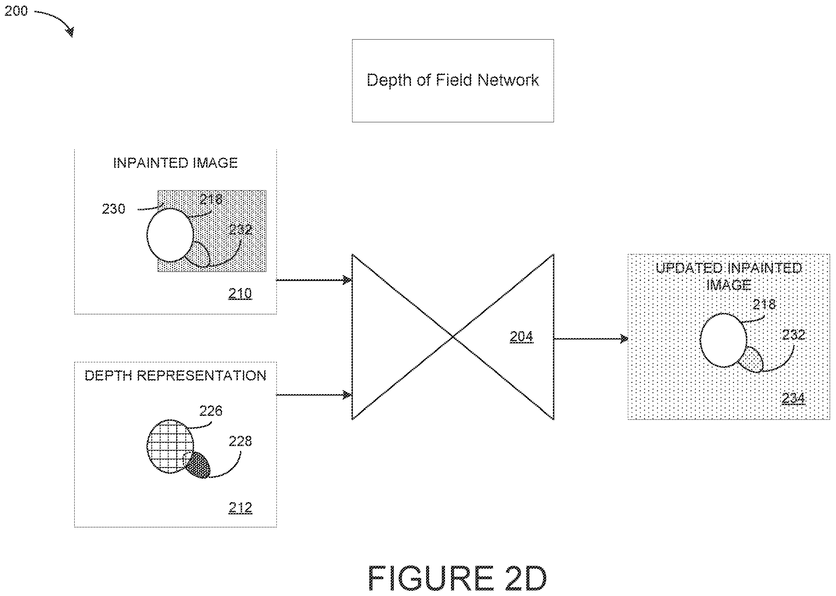

Figure 2D illustrates a portion of a system for generating an inpainted image, according to an example embodiment. In particular, Figure 2D illustrates an example in which a depth of field effect is applied to the inpainted image 212. The system 200 or a computing device associated with the system 200 may determine to apply a depth of field based on characteristics of the mask 206 or the inpainted image 212. For example, the mask 206 may include more than a threshold number of inpainting regions or the inpainting regions may occupy more than a threshold percentage of pixels in the input image 202. In other examples, determining to apply the depth of field effect may be based on a request from a client device (e.g., an option selected by a user of a mobile device).

The system 200 or a computing device associated with the system 200 provides the inpainted image 212 and the depth representation 210 to the depth of field network. The depth of field network leverages the depth representation 210 to apply a depth of field effect, such as a Bokeh effect, to the inpainted image 212. For example, the depth of field network 214 may output an updated inpainted image 234 that keeps the subject in focus, but defocuses other areas of the image. For example, all features beyond a threshold depth level may be defocused. In the examiner shown in Figure 2D, a background that includes the refined inpainting region 232. has a depth of field effect applied that blends an artifact associated with the refined inpainting region 232 with the background. This may assist in drawing attention to the subject 218 and reducing the noticeability of the artifact associated with the refined inpainting region 232.

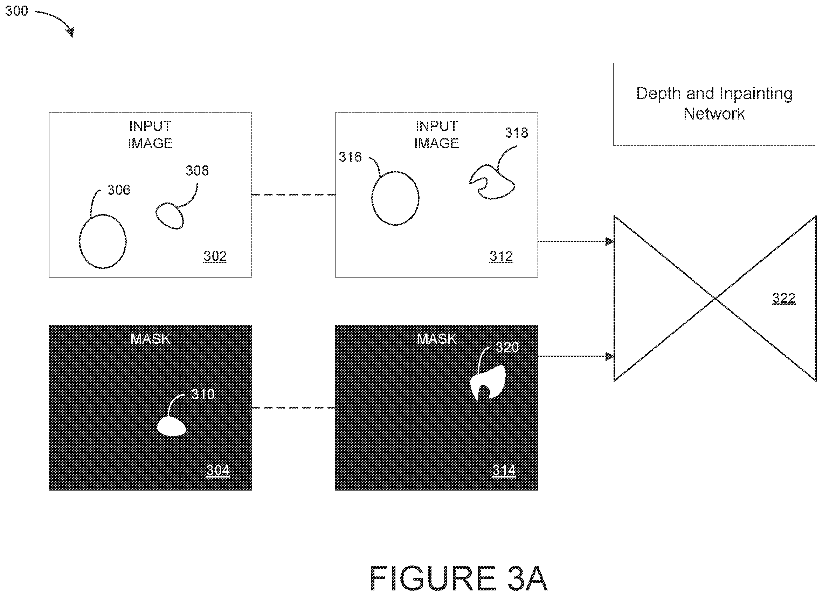

Figure 3A illustrates a portion of a system for training a machine learning model for image inpainting, according to an example embodiment. In particular, Figure 3A shows a system 300 that receives a plurality of input images and masks and trains the machine learning model for training. The plurality of input images and masks includes a first input image 302, a first mask 304, an n-th input image 312, and an n-th mask 314. Each input image includes at least one subject and a distractor. The distractor can be added to an existing image in order to train the machine learning model. Adding a distractor rather than using a mask network to extract distractors ensures that each input image includes a distractor, and also allows for a controllable mask for use when training the machine leaming model.

In the example depicted in Figure 3A, the machine learning model is a depth and inpainting network 322, which can be the same as or similar to the depth and inpainting network 118. The depth and inpainting network is trained using the plurality of input images and masks. The first input image 302 includes a first subject 306 and a first distractor 308. The first mask 304 includes an inpainting region corresponding to the first distractor 308. In particular, Figure 3A shows an augmented inpainting region 310 that is an adjusted version of the outline of the first distractor 308. The augmented inpainting region 310 in the first mask 304 is rotated relative to the outline of the first distractor 308. Inpainting regions can be augmented in other ways, such as by expanding, contracting, or adjusting the position of the outline within the mask. The n-th input image 312 includes an n-th subject 316 and an n-th distractor 318. Similar to the first mask 304, the n-th mask 314 includes an augmented inpainting region 320 that corresponds to the n-th distractor 318. Providing the plurality of input images and masks to the depth and inpainting network 322 with added distractors and augmented inpainting regions allows for controlled training data that effectively refines the inpainting regions to remove the added distractors while emulating inpainting regions of a mask network.

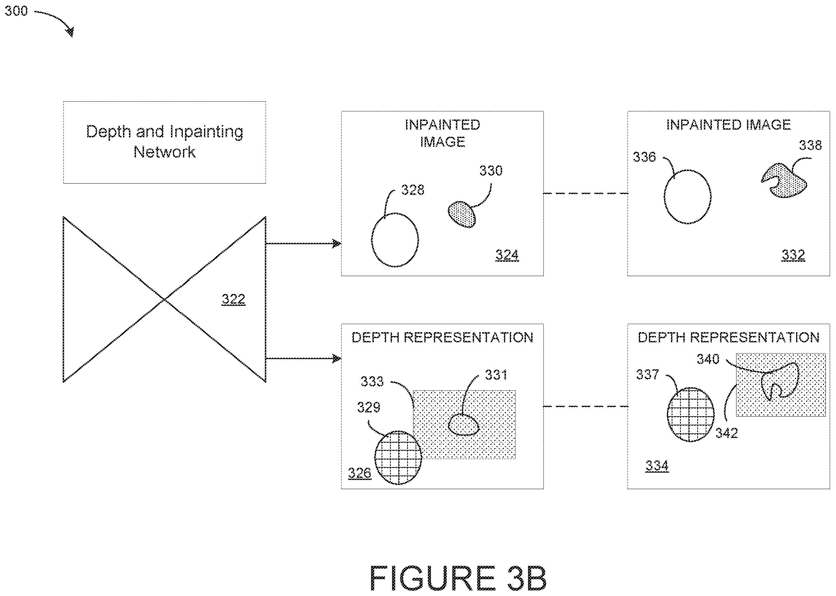

Figure 3B illustrates a portion of a system for training a machine learning model for image inpainting, according to an example embodiment. In particular, Figure 3B shows the system 300 providing a plurality of inpainted image and depth representations for use in evaluating a machine learning model. The plurality of inpainted images and depth representations includes a first inpainted image 324, a first depth representation 326, an n-th inpainted image 332, and an n-th depth representation 334.

The first depth representation 326 includes a first depth estimation 329 of the first subject 328 and a second depth estimation 331 of the first distractor 308. Because the first distractor 308 is added to the first input image, the second depth estimation 331 associated with the first distractor 308 is generated based on estimated depths of a surrounding region 333. For example, the second depth estimation 331 may be based on an average depth of the surrounding region 333. Similarly, the n-th depth representation 334 includes a first depth estimation 337 of the n-th subject 336 and a second depth estimation 340 of the n-th distractor 318. The second depth estimation 340 may be based on the depth of a surrounding region 342.

While training the depth and inpainting network 322, the inpainted images are evaluated based on how closely the inpainted regions match the distractors that are added to the input regions. In Figure 3B, a first inpainted region 330 of the first inpainted image 324 matches, or nearly matches, and outline of the first distractor 308 and an n-th inpainted region 338 of the n-th inpainted image 332 matches, or nearly matches, and outline of the n-th distractor 318. After determining that the depth and inpainting network 322 is outputting inpainted images that closely match a ground truth (e.g., the outlines of the added distractors), the system 300 may determine to use the depth and inpainting network for generating output images for client devices.

### III.Example Images

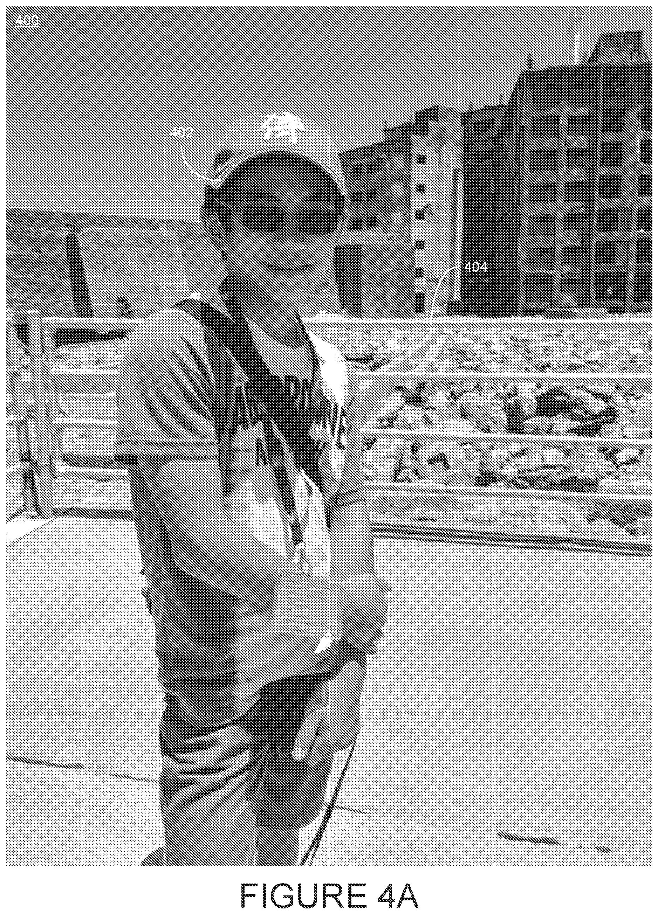

Figure 4A is an input image to be inpainted, according to an example embodiment. In particular, Figure 4A shows an input image 400 that includes a subject 402 and a distractor 404. The subject is in the foreground of the input image 400 and the distractor 404 is in the background. Because the subject is standing in front of the distractor 404, the subject 402 and the distractor are overlapping in the input image 400.

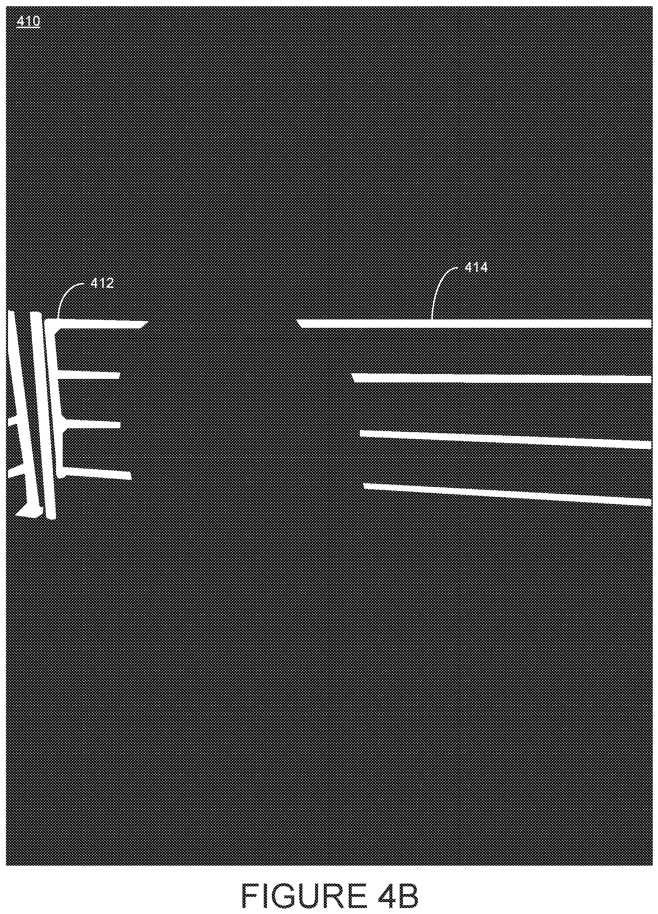

Figure 4B is a mask including a plurality if inpainting regions to be inpainted in the input image, according to an example embodiment. In particular, Figure 4B shows a mask 410 that includes a plurality of inpainting regions that correspond to an outline of the distractor 404. The plurality on inpainting regions include a first inpainting region 412 and a second inpainting region 414.

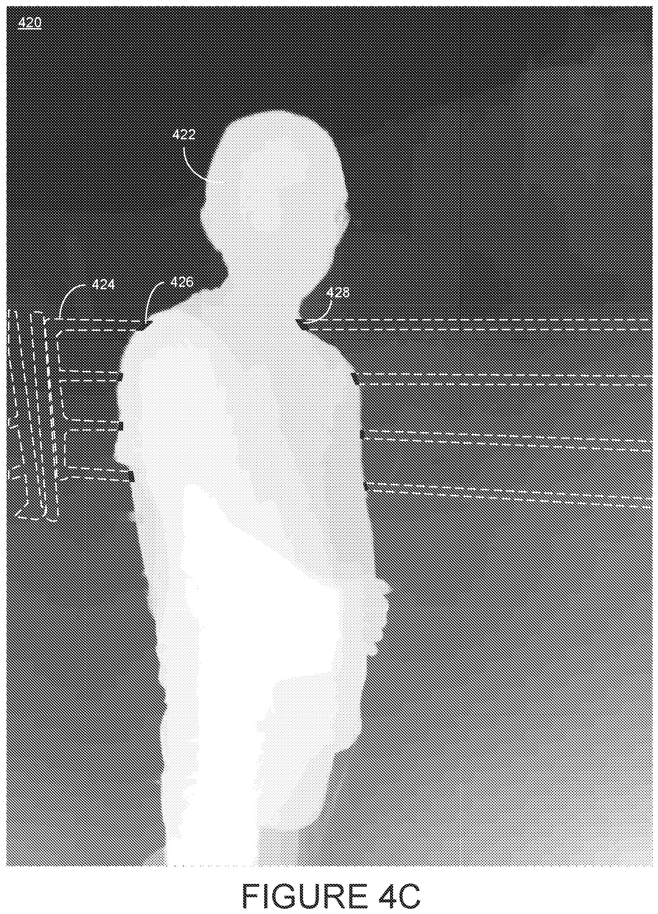

Figure 4C is a depth representation of the input image, according to an example embodiment. In particular, Figure 4C includes a depth representation 420 that includes a first depth estimation 422 of the subject 402 and a second depth estimation 424 of the distractor 404. Figure 4C also shows an outline of the first inpainting region 412 and the second inpainting region 414 to illustrate that the first inpainting region 412 and the second inpainting region 414 intersect with the subject. For example, overlapping regions 426 and 428 are portions of the first inpainting region 412 and the second inpainting region 414 that would remove details of the subject 402 if inpainted. The depth representation 420 allows for a depth and inpainting network to determine refinements to the first inpainting region 412 and the second inpainting region 414 that remove the overlapping regions. The overlapping regions may be the result of automatically expanding the inpainting regions to ensure that the distractor 404 is removed from the input image 402, based on inaccuracies in detecting the edges of the distractor 404, or based on inaccuracies in manually drawn inpainting regions.

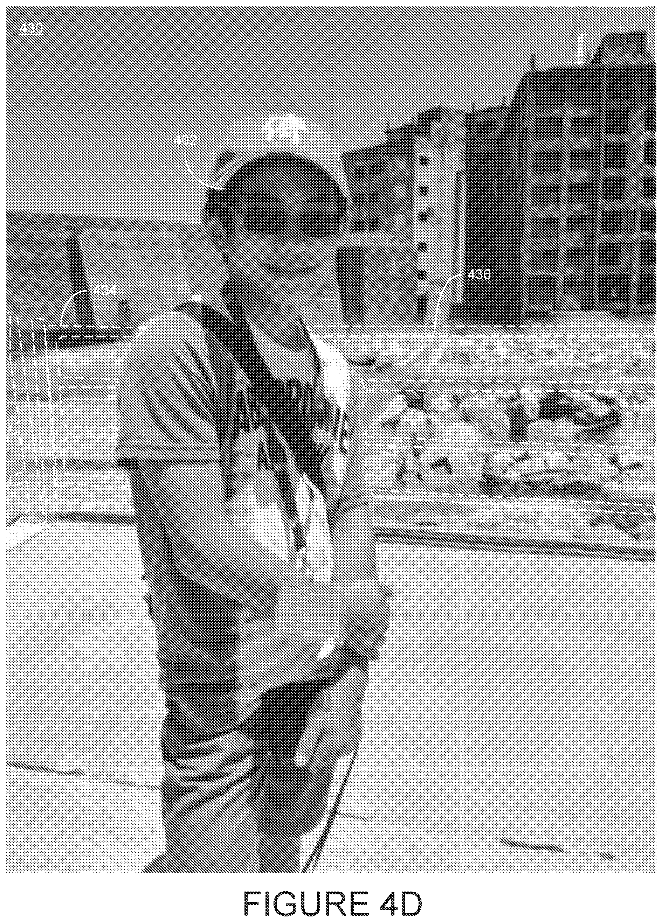

Figure 4D is an inpainted image, according to an example embodiment. In particular, Figure 4D shows an inpainted image 430 that has been inpainted in accordance with refining the first inpainting region 412 and the second inpainting region 414 so that the subject 402 remains while the distractor 404 is removed from the input image 400. Figure 4D includes the subject 402, an outline of a first refined inpainted region 434 and a second refined inpainting region 436. Inpainting the first refined inpainted region 434 and the second refined inpainting region 416 leaves artifacts in the inpainted image 430 that, while being less visible than the distractor 404, still are discernible in the image. A system (e.g., the system 100 or the system 200) may automatically determine this based on a number of inpainting regions or a size of the inpainting regions relative to a total size of the image (e.g., a percentage of pixels in the image that correspond to one or more inpainting regions). In other examples, a client device may indicate that the artifacts are notable (e.g., a selection might be provided by a user of the client device).

Figure 4E is an inpainted image with a depth of field effect, according to an example embodiment. In particular, Figure 4E shows an updated inpainted image 440, which is a version of the inpainted image 430 that has a depth of field effect. The updated inpainted image 440 includes the subject 402 and a background region 442. The subject 402 remains in focus and the background region 442 is defocused. Defocusing the entire background ensures that the first refined inpainted region 434 and the second refined inpainting region 436 blend in with the surrounding environment, and makes the artifacts associated with the first refined inpainted region 434 and the second refined inpainting region 436 less noticeable.

Figures 4A-4E show an example scenario for using a depth and inpainting network to leverage depth information while generating an inpainted image. It should be understood that Figures 4A-4E are illustrative and provide only one example context for inpainting an image.

### IV. Example Methods

Figure 5 is a block diagram of a method, according to an example embodiment. In particular, Figure 5 depicts a method 500 for use in generating an inpainted image based on an input image. The method 500 may be implemented in accordance with Figures 1-4E, components thereof, or the description thereof. For examples, aspects the method 500 may be performed by computing device 102, server system 114, one or more computing devices, or by logical circuitry configured to implement the functions described above.

At block 502, the method 500 includes receiving an image from an image capture device. For example, the image capture device can be a camera associated with a client device (e.g., a mobile device). For example, the image may be similar to the input image 202 shown in Figure 2A or the input image 400 shown in Figure 4A.

At block 504, the method 500 includes determining a mask for the image. The mask includes (i) one or more inpainting regions that each designate a portion of the image to be inpainted, and (ii) a non-inpainting region that is not to be inpainted. For example, determining the mask for the image may be based on inputs from a user of the client device (e.g., a drawn outline of one or more distractors in the image) or based on an output from a mask network (e.g., the mask network 116). The inpainting regions may correspond to particular objects in the image, such as distractors, and the non-inpainting region may be a remaining part of the image.

At block 506, the method 500 includes determining a depth representation including a pixelwise depth estimation for a scene represented by the image. For example, the scene may represent a plurality of different objects, including one or more subjects and one or more distractors. A respective inpainting region in the mask includes pixels that represent two or more features of the scene. For example, the inpainting region may represent a distractor and at least a portion of a subject. The two or more features have different depth estimates in the depth representation, and a respective feature of the two or more features overlaps with the non-inpainted region. For example, the respective feature of the image may be the subject, and the majority of the subject may overlap with the non-inpainting region. An example of this is illustrated in Figure 4C, where the inpainting regions overlap with the subject. Within examples, a depth and inpainting network can generate the depth representation.

At block 508, the method 500 includes refining the respective inpainting region based on (i) the two or more features having different depth estimates, and (ii) the respective feature of the two or more features overlapping with the non-inpainting region. For example, the depth and inpainting network can refine the inpainting regions by removing a portion of the respective inpainting region to omit the respective feature that overlaps with the non-inpainting region. In the context of Figure 4C, this includes removing the plurality of overlapping regions 426 and 428 from the inpainting regions.

At block 510, the method 500 includes inpainting the image in accordance with refining the respective inpainting region such that the portion of the respective feature that overlaps with the non-inpainted region is not inpainted. For example, this may correspond to Figure 4D, which shows the first refined inpainting region 434 and the second refined inpainting region 436, and which omits the subject 402 from inpainting.

Within examples, refining the respective inpainting region is performed concurrently with determining the depth representation for the image. For example, refining the respective inpainting region concurrently with determining the depth representation for the image includes applying a machine learning model to the image and to the mask. The machine learning model outputs a refined mask that includes the refined respective inpainting region. Within examples, the machine learning model (e.g., a depth and inpainting network) determines both the depth representation and the refined respective inpainting region.

Within examples, refining the respective inpainting region includes applying a machine learning model to the image and the mask to output a refined mask that includes the refined respective inpainting region. Within examples, the method 500 further includes training the machine learning model (i) to identify a plurality of objects within the scene, and (ii) to designate each object as a foreground object or a background object, and applying the machine learning model to the image to designate the respective feature of the two or more features being as a foreground object. For example, the respective feature may be a subject of the image that is situated in the foreground of the image. In these examples, refining the respective inpainting region is further based on designating the respective feature of the two or more features as a foreground object.

Within examples, refining the respective inpainting region includes applying a machine learning model to the image and the mask to output a refined mask that includes the refined respective inpainting region. In these examples, the method 500 further includes obtaining a plurality of training images, adding an image feature (e.g., a distractor) to each of the training images, creating a plurality of training masks corresponding to the plurality of training images, wherein each training mask comprises an image feature region comprising an initial outline of the added feature, augmenting each feature region by adjusting the initial outline of the added feature, and after augmenting each feature region of the plurality of masks, training the machine learning model using the plurality of training images and the plurality of masks using the initial outline of the added feature as ground truth for inpainting each training image using a corresponding mask. Within examples, the method 500 further includes, while training the machine learning model, applying each respective mask to a depth estimate of each corresponding training image, using the machine learning model to predict an inpainted depth estimate of each augmented feature region, and refining each augmented feature region based at least in part on the inpainted depth estimate of each augmented feature region. For example, these steps may be performed as described above with respect to Figures 3A-3B.

Within examples, the two or more features include a foreground feature (e.g., a subject) and a background feature (e.g., a distractor). In these examples, the foreground feature has a first depth, the background feature has a second depth, and the first depth is less than the second depth. Refining the respective inpainting region includes adjusting the inpainted region to omit the foreground feature based on the first depth being less than the second depth.

Within examples, refining the respective inpainting region includes removing at least a portion of the respective feature that overlaps with the non-inpainted region from the respective inpainting region. In the context of Figure 4C, this includes removing the plurality of overlapping regions 426 and 428 from the inpainting regions

Within examples, the method 500 further includes determining a foreground of the inpainted image and a background of the inpainted image, and applying a shallow depth of field to the inpainted image based on the one or more inpainting regions in the mask. For example, a depth of field network may apply a shallow depth of field to the inpainted image to keep the foreground in focus and the defocus the background. A shallow depth of field effect may keep all features of an image that are less than a threshold depth in focus, and defocus all features in the image that are greater than the threshold depth, for example.

Within examples, applying the shallow depth of field to the inpainted image includes determining a number of image artifacts in the inpainted image. Each image artifact corresponds to an inpainted region of the inpainted image. Applying the shallow depth of field to the inpainted image further includes determining that the number of image artifacts exceeds a threshold number (e.g., 5 artifacts), and applying the shallow depth of field to the image based on the number of image artifacts exceeding the threshold number. In this manner, the system can automatically determine whether to apply a depth of field effect.

Within examples, applying the shallow depth of field to the inpainted image includes detecting one or more image artifacts corresponding to one or more inpainted regions of the inpainted region, comparing, based on the depth representation, a depth of each image artifact to a foreground depth of the inpainted image, and applying the shallow depth of field to the inpainted image based on determining that the depth of each image artifact is greater than the foreground depth. For example, applying the shallow depth of field in this manner ensures that the image artifacts are removed. Different effects may be used, for example, if the depth of each image artifact is not greater than the foreground depth.

Thus, systems and methods are described that provide improvements to the field of image inpainting, and particularly to the field of automated image inpainting. For example, using a depth and inpainting network to concurrently determine a depth representation and to perform inpainting allows for more effective inpainting that avoids the subject of an image, reduces the amount of computing resources needed for separately determining a depth representation and an inpainted image, and allows for efficient and automatic application of depth of field effects to images with a high number of artifacts.

The particular arrangements shown in the Figures should not be viewed as limiting. It should be understood that other embodiments may include more or less of each element shown in a given Figure. Further, some of the illustrated elements may be combined or omitted. Yet further, an illustrative embodiment may include elements that are not illustrated in the Figures.

A step or block that represents a processing of information can correspond to circuitry that can be configured to perform the specific logical functions of a herein-described method or technique. Alternatively or additionally, a step or block that represents a processing of information can correspond to a module, a segment, a physical computer (e.g., a field programmable gate array (FPGA) or application-specific integrated circuit (ASIC)), or a portion of program code (including related data). The program code can include one or more instructions executable by a processor for implementing specific logical functions or actions in the method or technique. The program code and/or related data can be stored on any type of computer readable medium such as a storage device including a disk, hard drive, or other storage medium.

The computer readable medium can also include non-transitory computer readable media such as computer-readable media that store data for short periods of time like register memory, processor cache, and random access memory (RAM). The computer readable media can also include non-transitory computer readable media that store program code and/or data for longer periods of time. Thus, the computer readable media may include secondary or persistent long term storage, like read only memory (ROM), optical or magnetic disks, compact-disc read only memory (CD-ROM), for example. The computer readable media can also be any other volatile or non-volatile storage systems. A computer readable medium can be considered a computer readable storage medium, for example, or a tangible storage device.

While various examples and embodiments have been disclosed, other examples and embodiments will be apparent to those skilled in the art. The various disclosed examples and embodiments are for purposes of illustration and are not intended to be limiting, with the true scope being indicated by the following claims.

## Claims

1. A system comprising:
a computing device, comprising:
one or more processors;
a memory; and
a non-transitory computer readable medium having instructions stored thereon that when executed by a processor cause performance of a set of functions, wherein the set of functions comprises:
receiving an image from an image capture device;
determining a mask for the image, wherein the mask comprises (i) one or more inpainting regions that each designate a portion of the image to be inpainted, and (ii) a non-inpainting region that is not to be inpainted;
determining a depth representation comprising a pixelwise depth estimation for a scene represented by the image, wherein a respective inpainting region in the mask comprises pixels that represent two or more features of the scene, wherein the two or more features have different depth estimates in the depth representation, and wherein a respective feature of the two or more features overlaps with the non-inpainting region;
refining the respective inpainting region by adjusting one or more pixels included in the one or more portions of the image to be inpainted based on (i) the two or more features having different depth estimates, and (ii) the respective feature of the two or more features overlapping with the non-inpainting region; and
inpainting the image in accordance with refining the respective inpainting region such that the portion of the respective feature that overlaps with the non-inpainting region is not inpainted.

2. The system of claim 1, wherein refining the respective inpainting region comprises applying a machine learning model to the image and the mask to output a refined mask comprising the refined respective inpainting region.

3. The system of claim 2, wherein the computing device and the machine learning model are part of a server system.

4. The system of claim 2, the set of functions further comprising:
training the machine learning model (i) to identify a plurality of objects within the scene, and (ii) to designate each object as a foreground object or a background object; and
applying the machine learning model to the image to designate the respective feature of the two or more features being as a foreground object,
wherein refining the respective inpainting region is further based on designating the respective feature of the two or more features as a foreground object.

5. The system of claim 2, the set of functions further comprising:
obtaining a plurality of training images;
adding an image feature to each of the training images;
creating a plurality of training masks corresponding to the plurality of training images, wherein each training mask comprises an image feature region comprising an initial outline of the added feature;
adjusting each feature region by adjusting the initial outline of the added feature; and
after adjusting each feature region of the plurality of masks, training the machine learning model using the plurality of training images and the plurality of masks using the initial outline of the added feature as ground truth for inpainting each training image using a corresponding mask.

6. The system of claim 5, the set of functions further comprising:
while training the machine learning model, applying each respective mask to a depth estimate of each corresponding training image;
using the machine learning model to predict an inpainted depth estimate of each adjusted feature region; and
refining each adjusted feature region based at least in part on the inpainted depth estimate of each adjusted feature region.

7. A computer-implemented method comprising:
receiving an image from an image capture device;
determining a mask for the image, wherein the mask comprises (i) one or more inpainting regions that each designate a portion of the image to be inpainted, and (ii) a non-inpainting region that is not to be inpainted;
determining a depth representation comprising a pixelwise depth estimation for a scene represented by the image, wherein a respective inpainting region in the mask comprises pixels that represent two or more features of the scene, wherein the two or more features have different depth estimates in the depth representation, and wherein a respective feature of the two or more features overlaps with the non-inpainting region;
refining the respective inpainting region by adjusting one or more pixels included in the one or more portions of the image to be inpainted based on (i) the two or more features having different depth estimates, and (ii) the respective feature of the two or more features overlapping with the non-inpainting region; and
inpainting the image in accordance with refining the respective inpainting region such that the portion of the respective feature that overlaps with the non-inpainting region is not inpainted.

8. The method of claim 7, wherein refining the respective inpainting region is performed concurrently with determining the depth representation for the image.

9. The method of claim 8, wherein refining the respective inpainting region concurrently with determining the depth representation for the image comprises applying a machine learning model to the image and to the mask, wherein the machine learning model outputs a refined mask comprising the refined respective inpainting region.

10. The method of claim 9, wherein the machine learning model determines both the depth representation and the refined respective inpainting region.

11. The method of claim 7, wherein refining the respective inpainting region comprises applying a machine learning model to the image and the mask to output a refined mask comprising the refined respective inpainting region.

12. The method of claim 11, further comprising:
training the machine learning model (i) to identify a plurality of objects within the scene, and (ii) to designate each object as a foreground object or a background object; and
applying the machine learning model to the image to designate the respective feature of the two or more features being as a foreground object,
wherein refining the respective inpainting region is further based on designating the respective feature of the two or more features as a foreground object.

13. The method of claim 11, further comprising:
obtaining a plurality of training images;
adding an image feature to each of the training images;
creating a plurality of training masks corresponding to the plurality of training images, wherein each training mask comprises an image feature region comprising an initial outline of the added feature;
adjusting each feature region by adjusting the initial outline of the added feature; and
after adjusting each feature region of the plurality of masks, training the machine learning model using the plurality of training images and the plurality of masks using the initial outline of the added feature as ground truth for inpainting each training image using a corresponding mask, and optionally, further comprising:
while training the machine learning model, applying each respective mask to a depth estimate of each corresponding training image;
using the machine learning model to predict an inpainted depth estimate of each adjusted feature region; and
refining each adjusted feature region based at least in part on the inpainted depth estimate of each adjusted feature region.

14. The method of claim 7, wherein the two or more features comprise a foreground feature and a background feature,
wherein the foreground feature has a first depth,
wherein the background feature has a second depth, and
wherein refining the respective inpainting region comprises adjusting the inpainted region to omit the foreground feature, or, wherein refining the respective inpainting region comprises removing at least a portion of the respective feature that overlaps with the non-inpainted region from the respective inpainting region, or, further comprising:
determining a foreground of the inpainted image and a background of the inpainted image; and
applying a shallow depth of field to the inpainted image based on the one or more inpainting regions in the mask, and optionally, wherein applying the shallow depth of field to the inpainted image comprises:
determining a number of image artifacts in the inpainted image, wherein each image artifact corresponds to an inpainted region of the inpainted image;
determining that the number of image artifacts exceeds a threshold number; and
applying the shallow depth of field to the image based on the number of image artifacts exceeding the threshold number, or, wherein applying the shallow depth of field to the inpainted image comprises:
detecting one or more image artifacts corresponding to one or more inpainted regions of the inpainted region;
comparing, based on the depth representation, a depth of each image artifact to a foreground depth of the inpainted image; and
applying the shallow depth of field to the inpainted image based on determining that the depth of each image artifact is greater than the foreground depth.

15. A non-transitory computer readable medium having instructions stored thereon that when executed by a processor cause performance of the method of any of claims 7 to 14.

## Patentansprüche

1. System, umfassend:
eine Rechenvorrichtung, umfassend:
einen oder mehrere Prozessoren;
einen Speicher; und
ein nicht flüchtiges, computerlesbares Medium, auf dem Anweisungen gespeichert sind, die bei Ausführung durch einen Prozessor eine Durchführung eines Satzes von Funktionen bewirken, wobei der Satz von Funktionen Folgendes umfasst:
Empfangen eines Bildes aus einer Bildaufnahmevorrichtung;
Bestimmen einer Maske für das Bild, wobei die Maske (i) eine oder mehrere Inpainting-Regionen, die jeweils einen Abschnitt des durch Inpainting zu bearbeitenden Bildes bezeichnen, und (ii) eine Nicht-Inpainting-Region umfasst, die nicht durch Inpainting zu bearbeiten ist;
Bestimmen einer Tiefendarstellung, die eine pixelweise Tiefenschätzung für eine durch das Bild dargestellte Szene umfasst, wobei eine jeweilige Inpainting-Region in der Maske Pixel umfasst, die zwei oder mehr Merkmale der Szene darstellen, wobei die zwei oder die mehreren Merkmale unterschiedliche Tiefenschätzungen in der Tiefendarstellung aufweisen, und wobei sich ein entsprechendes Merkmal der zwei oder der mehreren Merkmale mit der Nicht-Inpainting-Region überlappt;
Verfeinern der jeweiligen Inpainting-Region durch Anpassen eines oder mehrerer Pixel, die in dem einen oder den mehreren Abschnitten des durch Inpainting zu bearbeitenden Bildes enthalten sind, basierend auf (i) den zwei oder den mehreren Merkmalen, die unterschiedliche Tiefenschätzungen aufweisen, und (ii) dem jeweiligen Merkmal der zwei oder der mehreren Merkmale, die sich mit der Nicht-Inpainting-Region überlappen; und
Durchführen des Inpaintings des Bildes gemäß dem Verfeinern der jeweiligen Inpainting-Region derart, dass der Abschnitt des jeweiligen Merkmals, der sich mit der Nicht-Inpainting-Region überlappt, nicht durch Inpainting bearbeitet wird.

2. System nach Anspruch 1, wobei das Verfeinern der jeweiligen Inpainting-Region das Anwenden eines Maschinenlernmodells auf das Bild und die Maske umfasst, um eine verfeinerte Maske auszugeben, welche die jeweilige verfeinerte Inpainting-Region umfasst.

3. System nach Anspruch 2, wobei die Rechenvorrichtung und das Maschinenlernmodell Teil eines Serversystems sind.

4. System nach Anspruch 2, wobei der Satz von Funktionen ferner Folgendes umfasst:
Trainieren des Maschinenlernmodells, (i) um eine Mehrzahl von Objekten innerhalb der Szene zu identifizieren und (ii) jedes Objekt als Vordergrundobjekt oder Hintergrundobjekt zu bezeichnen; und
Anwenden des Maschinenlernmodells auf das Bild, um das jeweilige Merkmal der zwei oder der mehreren Merkmale als Vordergrundobjekt zu bezeichnen,
wobei das Verfeinern der jeweiligen Inpainting-Region ferner auf dem Bezeichnen des jeweiligen Merkmals der zwei oder der mehreren Merkmale als Vordergrundobjekt basiert.

5. System nach Anspruch 2, wobei der Satz von Funktionen ferner Folgendes umfasst:
Erlangen einer Mehrzahl von Trainingsbildern;
Hinzufügen eines Bildmerkmals zu jedem der Trainingsbilder;
Erstellen einer Mehrzahl von Trainingsmasken entsprechend der Mehrzahl von Trainingsbildern, wobei jede Trainingsmaske eine Bildmerkmalsregion umfasst, umfassend einen anfänglichen Umriss des hinzugefügten Merkmals;
Anpassen jeder Merkmalsregion durch Anpassen des anfänglichen Umrisses des hinzugefügten Merkmals; und
nach dem Anpassen jeder Merkmalsregion der Mehrzahl von Masken, Trainieren des Maschinenlernmodells unter Verwendung der Mehrzahl von Trainingsbildern und der Mehrzahl von Masken unter Verwendung des anfänglichen Umrisses des hinzugefügten Merkmals als Ground Truth für das Durchführen des Inpaintings jedes Trainingsbildes unter Verwendung einer entsprechenden Maske.

6. System nach Anspruch 5, wobei der Satz von Funktionen ferner Folgendes umfasst:
beim Trainieren des Maschinenlernmodells, Anwenden jeder jeweiligen Maske auf eine Tiefenschätzung jedes entsprechenden Trainingsbildes;
Verwenden des Maschinenlernmodells, um eine durch Inpainting bearbeitete Tiefenschätzung jeder angepassten Merkmalsregion vorherzusagen; und
Verfeinern jeder angepassten Merkmalsregion mindestens teilweise basierend auf der durch Inpainting bearbeiteten Tiefenschätzung jeder angepassten Merkmalsregion.

7. Computerimplementiertes Verfahren, umfassend:
Empfangen eines Bildes aus einer Bildaufnahmevorrichtung;
Bestimmen einer Maske für das Bild, wobei die Maske (i) eine oder mehrere Inpainting-Regionen, die jeweils einen Abschnitt des durch Inpainting zu bearbeitenden Bildes bezeichnen, und (ii) eine Nicht-Inpainting-Region umfasst, die nicht durch Inpainting zu bearbeiten ist;
Bestimmen einer Tiefendarstellung, die eine pixelweise Tiefenschätzung für eine durch das Bild dargestellte Szene umfasst, wobei eine jeweilige Inpainting-Region in der Maske Pixel umfasst, die zwei oder mehr Merkmale der Szene darstellen, wobei die zwei oder die mehreren Merkmale unterschiedliche Tiefenschätzungen in der Tiefendarstellung aufweisen, und wobei sich ein entsprechendes Merkmal der zwei oder der mehreren Merkmale mit der Nicht-Inpainting-Region überlappt;
Verfeinern der jeweiligen Inpainting-Region durch Anpassen eines oder mehrerer Pixel, die in dem einen oder den mehreren Abschnitten des durch Inpainting zu bearbeitenden Bildes enthalten sind, basierend auf (i) den zwei oder den mehreren Merkmalen, die unterschiedliche Tiefenschätzungen aufweisen, und (ii) dem jeweiligen Merkmal der zwei oder der mehreren Merkmale, die sich mit der Nicht-Inpainting-Region überlappen; und
Durchführen des Inpaintings des Bildes gemäß dem Verfeinern der jeweiligen Inpainting-Region derart, dass der Abschnitt des jeweiligen Merkmals, der sich mit der Nicht-Inpainting-Region überlappt, nicht durch Inpainting bearbeitet wird.

8. Verfahren nach Anspruch 7, wobei das Verfeinern der jeweiligen Inpainting-Region gleichzeitig mit dem Bestimmen der Tiefendarstellung für das Bild durchgeführt wird.

9. Verfahren nach Anspruch 8, wobei das Verfeinern der jeweiligen Inpainting-Region gleichzeitig mit dem Bestimmen der Tiefendarstellung für das Bild das Anwenden eines Maschinenlernmodells auf das Bild und die Maske umfasst, wobei das Maschinenlernmodell eine verfeinerte Maske ausgibt, welche die jeweilige verfeinerte Inpainting-Region umfasst.

10. Verfahren nach Anspruch 9, wobei das Maschinenlernmodell sowohl die Tiefendarstellung als auch die jeweilige verfeinerte Inpainting-Region bestimmt.

11. Verfahren nach Anspruch 7, wobei das Verfeinern der jeweiligen Inpainting-Region das Anwenden eines Maschinenlernmodells auf das Bild und die Maske umfasst, um eine verfeinerte Maske auszugeben, welche die jeweilige verfeinerte Inpainting-Region umfasst.

12. Verfahren nach Anspruch 11, ferner umfassend:
Trainieren des Maschinenlernmodells, (i) um eine Mehrzahl von Objekten innerhalb der Szene zu identifizieren und (ii) jedes Objekt als Vordergrundobjekt oder Hintergrundobjekt zu bezeichnen; und
Anwenden des Maschinenlernmodells auf das Bild, um das jeweilige Merkmal der zwei oder der mehreren Merkmale als Vordergrundobjekt zu bezeichnen,
wobei das Verfeinern der jeweiligen Inpainting-Region ferner auf dem Bezeichnen des jeweiligen Merkmals der zwei oder der mehreren Merkmale als Vordergrundobjekt basiert.

13. Verfahren nach Anspruch 11, ferner umfassend:
Erlangen einer Mehrzahl von Trainingsbildern;
Hinzufügen eines Bildmerkmals zu jedem der Trainingsbilder;
Erstellen einer Mehrzahl von Trainingsmasken entsprechend der Mehrzahl von Trainingsbildern, wobei jede Trainingsmaske eine Bildmerkmalsregion umfasst, umfassend einen anfänglichen Umriss des hinzugefügten Merkmals;
Anpassen jeder Merkmalsregion durch Anpassen des anfänglichen Umrisses des hinzugefügten Merkmals; und
nach dem Anpassen jeder Merkmalsregion der Mehrzahl von Masken, Trainieren des Maschinenlernmodells unter Verwendung der Mehrzahl von Trainingsbildern und der Mehrzahl von Masken unter Verwendung des anfänglichen Umrisses des hinzugefügten Merkmals als Ground Truth für das Durchführen des Inpaintings jedes Trainingsbildes unter Verwendung einer entsprechenden Maske, und optional ferner umfassend:
beim Trainieren des Maschinenlernmodells, Anwenden jeder jeweiligen Maske auf eine Tiefenschätzung jedes entsprechenden Trainingsbildes;
Verwenden des Maschinenlernmodells, um eine durch Inpainting bearbeitete Tiefenschätzung jeder angepassten Merkmalsregion vorherzusagen; und
Verfeinern jeder angepassten Merkmalsregion mindestens teilweise basierend auf der durch Inpainting bearbeiteten Tiefenschätzung jeder angepassten Merkmalsregion.

14. Verfahren nach Anspruch 7, wobei die zwei oder die mehreren Merkmale ein Vordergrundmerkmal und ein Hintergrundmerkmal umfassen,
wobei das Vordergrundmerkmal eine erste Tiefe aufweist,
wobei das Hintergrundmerkmal eine zweite Tiefe aufweist, und
wobei das Verfeinern der jeweiligen Inpainting-Region das Anpassen des durch Inpainting bearbeiteten Region umfasst, um das Vordergrundmerkmal auszulassen, oder wobei das Verfeinern der jeweiligen Inpainting-Region das Entfernen mindestens eines Abschnitts des jeweiligen Merkmals, der sich mit der nicht durch Inpainting bearbeiteten Region überlappt, aus der jeweiligen Inpainting-Region umfasst, oder ferner umfassend:
Bestimmen eines Vordergrunds des durch Inpainting bearbeiteten Bildes und eines Hintergrunds des durch Inpainting bearbeiteten Bildes; und
Anwenden einer geringen Schärfentiefe auf das durch Inpainting bearbeitete Bild basierend auf der einen oder den mehreren Inpainting-Regionen in der Maske, und wobei das Anwenden der geringen Schärfentiefe auf das durch Inpainting bearbeitete Bild optional Folgendes umfasst:
Bestimmen einer Anzahl von Bildartefakten in dem durch Inpainting bearbeiteten Bild, wobei jedes Bildartefakt einer durch Inpainting bearbeiteten Region des durch Inpainting bearbeiteten Bildes entspricht;
Bestimmen, dass die Anzahl von Bildartefakten eine Schwellenwertzahl überschreitet; und
Anwenden der geringen Schärfentiefe auf das Bild basierend auf der Anzahl von Bildartefakten, welche die Schwellenwertzahl überschreiten, oder wobei das Anwenden der geringen Schärfentiefe auf das durch Inpainting bearbeitete Bild Folgendes umfasst:
Erkennen eines oder mehrerer Bildartefakte entsprechend einer oder mehreren durch Inpainting bearbeiteten Regionen der durch Inpainting bearbeiteten Region;
Vergleichen einer Tiefe jedes Bildartefakts mit der Vordergrundtiefe des durch Inpainting bearbeiteten Bildes basierend auf der Tiefendarstellung; und
Anwenden der geringen Schärfentiefe auf das durch Inpainting bearbeitete Bild basierend auf dem Bestimmen, dass die Tiefe jedes Bildartefakts größer als die Vordergrundtiefe ist.

15. Nicht flüchtiges, computerlesbares Medium, auf dem Anweisungen gespeichert sind, die bei Ausführung durch einen Prozessor eine Durchführung des Verfahrens nach einem der Ansprüche 7 bis 14 bewirken.

## Revendications

1. Système comprenant :
un dispositif informatique, comprenant :
un ou plusieurs processeurs ;
une mémoire ; et
un support non transitoire lisible par ordinateur sur lequel sont stockées des instructions qui, lorsqu'elles sont exécutées par un processeur, entraînent l'exécution d'un ensemble de fonctions, dans lequel l'ensemble de fonctions comprend :
la réception d'une image à partir d'un dispositif de capture d'images ;
la détermination d'un masque pour l'image, dans lequel le masque comprend (i) une ou plusieurs régions de retouche qui désignent chacune une partie de l'image à retoucher, et (ii) une région sans retouche qui ne doit pas être retouchée ;
la détermination d'une représentation de profondeur comprenant une estimation de profondeur pixel par pixel pour une scène représentée par l'image, dans lequel une région de retouche respective dans le masque comprend des pixels qui représentent deux caractéristiques ou plus de la scène, dans lequel les deux caractéristiques ou plus ont des estimations de profondeur différentes dans la représentation de profondeur, et dans lequel une caractéristique respective des deux caractéristiques ou plus chevauche la région sans retouche ;
l'affinage de la région de retouche respective en réglant un ou plusieurs pixels inclus dans les une ou plusieurs parties de l'image à retoucher sur la base du fait que (i) les deux caractéristiques ou plus ont des estimations de profondeur différentes, et (ii) de la caractéristique respective des deux caractéristiques ou plus chevauche la région sans retouche ; et
la retouche de l'image conformément à l'affinage de la région de retouche respective de sorte que la partie de la caractéristique respective qui chevauche la région sans retouche ne soit pas retouchée.

2. Système selon la revendication 1, dans lequel l'affinage de la région de retouche respective comprend l'application d'un modèle d'apprentissage automatique à l'image et au masque pour produire un masque affiné comprenant la région de retouche respective affinée.

3. Système selon la revendication 2, dans lequel le dispositif informatique et le modèle d'apprentissage automatique font partie d'un système serveur.

4. Système selon la revendication 2, l'ensemble de fonctions comprenant en outre :
l'entraînement du modèle d'apprentissage automatique (i) à identifier une pluralité d'objets dans la scène, et (ii) à désigner chaque objet comme objet de premier plan ou objet d'arrière-plan ; et
l'application du modèle d'apprentissage automatique à l'image pour désigner la caractéristique respective des deux caractéristiques ou plus comme objet de premier plan,
dans lequel l'affinage de la région de retouche respective est en outre basé sur la désignation de la caractéristique respective des deux caractéristiques ou plus comme objet de premier plan.

5. Système selon la revendication 2, l'ensemble de fonctions comprenant en outre :
l'obtention d'une pluralité d'images d'entraînement ;
l'ajout d'une caractéristique d'image à chacune des images d'entraînement ;
la création d'une pluralité de masques d'entraînement correspondant à la pluralité d'images d'entraînement, dans lequel chaque masque d'entraînement comprend une région de caractéristique d'image comprenant un contour initial de la caractéristique ajoutée ;
le réglage de chaque région de caractéristique en réglant le contour initial de la caractéristique ajoutée ; et
après le réglage de chaque région de caractéristique de la pluralité de masques, l'entraînement du modèle d'apprentissage automatique à l'aide de la pluralité d'images d'entraînement et de la pluralité de masques à l'aide du contour initial de la caractéristique ajoutée comme vérité terrain pour la retouche de chaque image d'entraînement à l'aide d'un masque correspondant.

6. Système selon la revendication 5, l'ensemble de fonctions comprenant en outre :
lors de l'entraînement du modèle d'apprentissage automatique, l'application de chaque masque respectif à une estimation de profondeur de chaque image d'entraînement correspondante ;
l'utilisation du modèle d'apprentissage automatique pour prédire une estimation de profondeur retouchée de chaque région de caractéristique réglée ; et
l'affinage de chaque région de caractéristique réglée sur la base au moins en partie de l'estimation de profondeur retouchée de chaque région de caractéristique réglée.

7. Procédé mis en œuvre par ordinateur comprenant :
la réception d'une image à partir d'un dispositif de capture d'images ;
la détermination d'un masque pour l'image, dans lequel le masque comprend (i) une ou plusieurs régions de retouche qui désignent chacune une partie de l'image à retoucher, et (ii) une région sans retouche qui ne doit pas être retouchée ;
la détermination d'une représentation de profondeur comprenant une estimation de profondeur pixel par pixel pour une scène représentée par l'image, dans lequel une région de retouche respective dans le masque comprend des pixels qui représentent deux caractéristiques ou plus de la scène, dans lequel les deux caractéristiques ou plus ont des estimations de profondeur différentes dans la représentation de profondeur, et dans lequel une caractéristique respective des deux caractéristiques ou plus chevauche la région sans retouche ;
l'affinage de la région de retouche respective en réglant un ou plusieurs pixels inclus dans les une ou plusieurs parties de l'image à retoucher sur la base du fait que (i) les deux caractéristiques ou plus ont des estimations de profondeur différentes, et (ii) de la caractéristique respective des deux caractéristiques ou plus chevauche la région sans retouche ; et
la retouche de l'image conformément à l'affinage de la région de retouche respective de sorte que la partie de la caractéristique respective qui chevauche la région sans retouche ne soit pas retouchée.

8. Procédé selon la revendication 7, dans lequel l'affinage de la région de retouche respective est exécuté simultanément à la détermination de la représentation de profondeur pour l'image.

9. Procédé selon la revendication 8, dans lequel l'affinage de la région de retouche respective simultanément à la détermination de la représentation de profondeur pour l'image comprend l'application d'un modèle d'apprentissage automatique à l'image et au masque, dans lequel le modèle d'apprentissage automatique produit un masque affiné comprenant la région de retouche respective affinée.

10. Procédé selon la revendication 9, dans lequel le modèle d'apprentissage automatique détermine à la fois la représentation de profondeur et la région de retouche respective affinée.

11. Procédé selon la revendication 7, dans lequel l'affinage de la région de retouche respective comprend l'application d'un modèle d'apprentissage automatique à l'image et au masque pour produire un masque affiné comprenant la région de retouche respective affinée.

12. Procédé selon la revendication 11, comprenant en outre :
l'entraînement du modèle d'apprentissage automatique (i) à identifier une pluralité d'objets dans la scène, et (ii) à désigner chaque objet comme objet de premier plan ou objet d'arrière-plan ; et
l'application du modèle d'apprentissage automatique à l'image pour désigner la caractéristique respective des deux caractéristiques ou plus comme objet de premier plan,
dans lequel l'affinage de la région de retouche respective est en outre basé sur la désignation de la caractéristique respective des deux caractéristiques ou plus comme objet de premier plan.

13. Procédé selon la revendication 11, comprenant en outre :
l'obtention d'une pluralité d'images d'entraînement ;
l'ajout d'une caractéristique d'image à chacune des images d'entraînement ;
la création d'une pluralité de masques d'entraînement correspondant à la pluralité d'images d'entraînement, dans lequel chaque masque d'entraînement comprend une région de caractéristique d'image comprenant un contour initial de la caractéristique ajoutée ;
le réglage de chaque région de caractéristique en réglant le contour initial de la caractéristique ajoutée ; et
après le réglage de chaque région de caractéristique de la pluralité de masques, l'entraînement du modèle d'apprentissage automatique à l'aide de la pluralité d'images d'entraînement et de la pluralité de masques à l'aide du contour initial de la caractéristique ajoutée comme vérité terrain pour la retouche de chaque image d'entraînement à l'aide d'un masque correspondant, et éventuellement comprenant en outre :
lors de l'entraînement du modèle d'apprentissage automatique, l'application de chaque masque respectif à une estimation de profondeur de chaque image d'entraînement correspondante ;
l'utilisation du modèle d'apprentissage automatique pour prédire une estimation de profondeur retouchée de chaque région de caractéristique réglée ; et
l'affinage de chaque région de caractéristique réglée sur la base au moins en partie de l'estimation de profondeur retouchée de chaque région de caractéristique réglée.

14. Procédé selon la revendication 7, dans lequel les deux caractéristiques ou plus comprennent une caractéristique de premier plan et une caractéristique d'arrière-plan,
dans lequel la caractéristique de premier plan a une première profondeur,
dans lequel la caractéristique d'arrière-plan a une seconde profondeur, et
dans lequel l'affinage de la région de retouche respective comprend le réglage de la région retouchée pour omettre la caractéristique de premier plan, ou, dans lequel l'affinage de la région de retouche respective comprend la suppression d'au moins une partie de la caractéristique respective qui chevauche la région non retouchée de la région de retouche respective, ou, comprenant en outre :
la détermination d'un premier plan de l'image retouchée et d'un arrière-plan de l'image retouchée ; et
l'application d'une faible profondeur de champ à l'image retouchée sur la base des une ou plusieurs régions de retouche dans le masque, et éventuellement, dans lequel l'application de la faible profondeur de champ à l'image retouchée comprend :
la détermination d'un nombre d'artefacts d'image dans l'image retouchée, dans lequel chaque artefact d'image correspond à une région retouchée de l'image retouchée ;
la détermination que le nombre d'artefacts d'image dépasse un nombre seuil ; et
l'application de la faible profondeur de champ à l'image sur la base du nombre d'artefacts d'image dépassant le nombre seuil, ou, dans lequel l'application de la faible profondeur de champ à l'image retouchée comprend :
la détection d'un ou de plusieurs artefacts d'image correspondant à une ou plusieurs régions retouchées de la région retouchée ;
la comparaison, sur la base de la représentation de profondeur, d'une profondeur de chaque artefact d'image à une profondeur de premier plan de l'image retouchée ; et
l'application de la faible profondeur de champ à l'image retouchée sur la base de la détermination que la profondeur de chaque artefact d'image est supérieure à la profondeur de premier plan.

15. Support non transitoire lisible par ordinateur sur lequel sont stockées des instructions qui, lorsqu'elles sont exécutées par un processeur, entraînent l'exécution du procédé selon l'une quelconque des revendications 7 à 14.
